# EUROPÄISCHE PATENTANMELDUNG

(11) **EP 3 510 872 A1**
(43) Veröffentlichungstag der Anmeldung: **17.07.2019**
(21) Anmeldenummer: 19000012.5
(22) Anmeldetag: 10.01.2019
(51) Int. Cl.: A23G 1/20, A23G 1/00, A23G 1/22, A23G 3/34, A23G 3/02

(54) **VERFAHREN ZUR ÜBERTRAGUNG EINES GIESSBAREN LEBENSMITTELS UND VORRICHTUNG ZUR DURCHFÜHRUNG DES VERFAHRENS**

(30) Priorität: 13.01.2018 DE 102018000190
(71) Anmelder: Junge, Jasmin, 86981 Kinsau (DE)
(72) Erfinder: Junge, Jasmin, 86981 Kinsau (DE)
(74) Vertreter: Prünte, Peter

(57) **Zusammenfassung**

Ein Verfahren zur Übertragung eines als gießbare Masse vorliegenden ersten Lebensmittels auf eine Kontaktoberfläche ist dadurch gekennzeichnet, dass das erste Lebensmittel in eine Druckform (1) eingebracht wird, die eine bildliche Darstellung wiedergibt, und dass das erste Lebensmittel dann aus der Druckform (1) auf ein zweites, die Kontaktoberfläche bildendes Lebensmittel übertragen wird.

## Beschreibung

Die Erfindung bezieht sich auf ein Verfahren zur Übertragung eines als gießbare Masse vorliegenden ersten Lebensmittels auf eine Kontaktoberfläche.

In US 2017/0295816 A1 wird ein 3D-Lebensmitteldrucker offenbart, der einen Trichter in einem Druckkopf mit einem Kühlsystem umfasst, um ein Lebensmittelmaterial zu speichern und über eine Düse einem Substrat zuzuführen. Ferner wird ein Fördersystem offenbart, das das Substrat nach dem Auftrag des Lebensmittelmaterials abtransportiert.

Aus DE 10 2007 024 028 A1 ist eine Vorrichtung zum Gießen eines Verzehrproduktes aus einer gießbaren Masse, insbesondere aus einer Fettmasse wie z.B. Schokolade, bekannt.

DE 698 24 560 T2 betrifft ein Verfahren zum Ausformen von Schokoladenprodukten und schokoladenähnlichen Zusammensetzungen. Dabei wird unter dem Begriff "Ausformen" ein Verfahren verstanden, bei dem Schokolade in Formen abgeschieden, abkühlen gelassen und zu massiven Stücken verhärtet wird.

Derartige Gießmaschinen enthalten einen Massebehälter zur Aufnahme der gießbaren Masse und eine Dosiereinheit mit Düsen, die mit dem Massebehälter-Innenraum in Fluidverbindung stehen.

In der Praxis bestehen die Bestandteile solcher Gießmaschinen aus starren Metallteilen. Der Massebehälter dient zur Aufnahme der gießbaren Masse. Von seinem Boden führen Leitungen weg, die jeweils in eine von einer Vielzahl von Kammern münden, in denen jeweils ein Kolben bewegbar ist. Jede der Kammern ist andererseits mit jeweils einer Düse verbunden. Eine Ventilfunktion ist für jede Kammer/Kolben/Düsen-Einheit vorgesehen.

In einem Ansaughub öffnet das jeweilige Ventil die jeweilige Verbindungsleitung zwischen dem Massebehälter und der jeweiligen Kammer, während die jeweilige Verbindungsleitung zwischen der jeweiligen Kammer und der jeweiligen Düse blockiert wird. Der jeweilige Kolben bewegt sich in der Kammer dann derart, dass das freie Kammervolumen vergrößert und Masse in die jeweilige Kammer hineingesaugt wird.

In einem Ausstoßhub schließt das jeweilige Ventil die jeweilige Verbindungsleitung zwischen dem Massebehälter und der jeweiligen Kammer, während die jeweilige Verbindungsleitung zwischen der jeweiligen Kammer und der jeweiligen Düse geöffnet wird. Der jeweilige Kolben bewegt sich in der Kammer dann derart, dass das freie Kammervolumen verkleinert und Masse aus der jeweiligen Kammer heraus und zur jeweiligen Düse gepumpt wird. Die aus der Düse austretende Masse wird dann auf eine Unterlage oder in eine Hohlform gepresst bzw. gegossen.

Bei einigen besonderen Bauformen derartiger Gießmaschinen ist die Ventilfunktion mit der Kolbenfunktion gekoppelt. Hierfür ist der Kolben z.B. als im wesentlichen zylindrischer Hub/Dreh-Kolben ausgebildet, der in einer Zylinderkammer einerseits eine Hubbewegung entlang der Achse der Kammer bzw. des Kolbens und andererseits eine Drehbewegung um die Achse der Kammer bzw. des Kolbens ausführen, kann. Durch eine spezielle Anordnung der Einmündungen der Verbindungsleitungen in der jeweiligen Kammerwand und entsprechende Aussparungen und/oder Durchtritte in dem jeweiligen Kolben kann durch eine Abfolge von Hub- und Drehbewegungen des jeweiligen Kolbens in einer ersten Richtung und einer entgegengesetzten zweiten Richtung ein vollständiger Gießzyklus durchgeführt werden.

Bei derartigen Gießmaschinen muss erheblicher Aufwand beim Gießen dünnflüssiger Massen getrieben werden, um am Ende des Ausstoßhubes ein Nachfließen aus der Düse zu verhindern. Bei den meisten Anwendungen, in denen Schokoladenmasse gegossen wird, erfolgt das Gießen bei derart hohen Temperaturen, dass zumindest die bei niedrigeren Temperaturen schmelzenden Kristallmodifikationen der Triglyceride aufgeschmolzen sind, so dass die Schokoladenmasse insgesamt in einem recht dünnflüssigen Zustand vorliegt und ein Nachfließen an den Düsen stattfindet.

Da in der Regel kleine Mengen pro Gießzyklus gegossen werden, findet fast der gesamte Gießvorgang im transienten (nicht-stationären) Modus statt. Neben dem vorgenannten Nachfließen und den dadurch zumindest mitverursachten Dosierabweichungen führt das vorwiegend im transienten Bereich stattfindende Gießen aber auch zu strukturellen Veränderungen in der Masse. Dies kann zu Beeinträchtigungen der Qualität der gegossenen Schokoladenmassen führen. Außerdem ist es praktisch nicht möglich, bei vorgegebenen Produktionsleistungen (Taktfrequenz und Dosiermenge pro Takt) den durch die Fließeigenschaften (Viskosität) von zu gießender Schokoladenmasse und durch die geometrischen Randbedingungen bedingten zeitlichen Verlauf des Strömungswiderstandes zu beeinflussen,

Der Erfindung liegt daher die Aufgabe zugrunde, ein Verfahren zur Übertragung eines gießbaren Lebensmittels zu schaffen, das sich einfach realisieren lässt und das die bei einer Gießvorrichtung auftretenden Schwierigkeiten vermeidet.

Erfindungsgemäß wird diese Aufgabe gelöst, wie in Patentanspruch 1 angegeben.

Erfindungsgemäß ist vorgesehen, dass ein erstes Lebensmittel in eine Druckform eingebracht wird, die eine bildliche Darstellung wiedergibt, und dass das erste Lebensmittel dann aus der Druckform auf ein zweites, die Kontaktoberfläche bildendes Lebensmittel übertragen wird.

Das gemäß der Erfindung vorgesehene Verfahren entspricht somit einem Druckverfahren, bei dem eine Druckfarbe auf einen Bedruckstoff als Substrat aufgebracht wird.

Erfindungsgemäß wird dieses Verfahren entweder durch Übertragung von einem ebenen Träger des ersten Lebensmittels auf einen ebenen oder gewölbten Träger des zweiten Lebensmittels ausgeführt oder dadurch, dass das erste Lebensmittel von einem zylindrischen Träger auf einen ebenen oder gewölbten Träger des zweiten Lebensmittels übertragen wird.

Durch die Erfindung wird der Einsatz eines komplexen Düsensystems im Rahmen einer Gießvorrichtung vermieden, wie es bei einem bekannten 3D-Druck erforderlich ist. Auch ein Verstopfen von Düsen und Zuführungsleitungen für ein in einen dünnflüssigen Zustand gebrachtes Lebensmittel tritt nicht auf. Zudem ist gemäß der Erfindung eine viel geringere Temperaturbelastung des Lebensmittels erforderlich, wodurch die natürlichen Eigenschaften des zu verarbeitenden Lebensmittels besser erhalten werden.

Gleichwohl lässt sich durch die Erfindung durch die Wahl der Temperierung und durch die Verformung der Druckform ein Herauslösen des ersten Lebensmittels aus der Druckform erreichen. Durch Zusammendrücken und gleichzeitiges Abkühlen wird das erste Lebensmittel auf der die Kontaktoberfläche bildenden Oberfläche des zweiten Lebensmittels aufgetragen.

Vorteilhafte Weiterbildungen der Erfindung ergeben sich aus den Unteransprüchen und der Beschreibung in Verbindung mit den Zeichnungen.

Von Vorteil ist es insbesondere, wenn das erste Lebensmittel temperiert und in die Druckform eingebracht wird, dass überschüssige Mengen des ersten Lebensmittels mittels einer Rakel entfernt werden, dass das erste, in der Druckform befindliche Lebensmittel auf das zweite, ebenfalls temperierte Lebensmittel aufgebracht und zur Bildung eines Verbundes auf dieses aufgebracht und gemeinsam mit dem zweiten Lebensmittel abgekühlt wird und dass die Druckform von dem Verbund der beiden gekühlten Lebensmittel abgezogen wird. Das Aufbringen des ersten Lebensmittels geschieht beispielsweise durch Andrücken oder Zusammendrücken der beiden Lebensmittel. Die Art des Aufbringens hängt davon ab, im welchem Maße das erste Lebensmittel flüssig oder viskos ist, ebenso auch davon, ob das zweite Lebensmittel vollständig fest oder viskos ist.

Vorteilhaft ist es außerdem, wenn die Druckform von einer Silikonmatte gebildet wird, wobei das zweite, in einer Hohlform befindliche Lebensmittel an der Kontaktoberfläche mit der Oberfläche des ersten Lebensmittels in Verbindung gebracht wird, und die Silikonmatte, insbesondere in Verbindung mit einer Trägerplatte, nach dem Befüllen und Abrakeln des überschüssigen ersten Lebensmittels gegenüber der Hohlform fixiert wird. Durch die Rakelbewegung wird das erste Lebensmittel in der Druckform wenigstens soweit in Bewegung versetzt, dass Luftbläschen, die sich auf dem Boden der Druckform gebildet haben, insbesondere im Bereich von Unebenheiten auf dem Boden der Druckform, aufsteigen und auf diese Weise beim Abrakeln zusammen mit überschüssiger Masse des ersten Lebensmittels entfernt werden. Die Silikonmatte lässt sich aufgrund ihrer Elastizität nach dem gemeinsamen Erkalten der beiden Lebensmittel und dem dadurch erreichten Verbinden an ihrer gemeinsamen Oberfläche leicht von dem dadurch entstandenen Substrat leicht durch Verbiegen von dem ersten Lebensmittel entfernen, so dass sie im Regelfall ohne einen zwischenzeitlichen Reinigungsvorgang erneut mit dem ersten Lebensmittel befüllt wird, um den Druckvorgang in der gleichen Weise zu wiederholen.

In vorteilhafter Weise wird die Hohlform zur Aufnahme des zweiten Lebensmittels von einer Rahmenplatte gebildet, in die das zweite Lebensmittel nach dem Fixieren der Silikonmatte eingebracht wird. Auch die Rahmenplatte lässt sich nach dem Erkalten des zweiten Lebensmittels, nachdem dieses mit dem ersten Lebensmittel verbunden ist, leicht abziehen und wieder verwenden.

In besonders vorteilhafter Weise wird das erste Lebensmittel in eine auf der Mantelfläche eines sich drehenden Zylinders angeordnete Druckform eingebracht wird. Sodann werden überschüssige Mengen des ersten Lebensmittels nach dem Entfernen überschüssiger Mengen des ersten Lebensmittels, was insbesondere mittels einer Rakel erreicht wird, auf das zweite Lebensmittel aufgebracht, das auf einem ebenen Band mit einer Geschwindigkeit transportiert wird, die im Wesentlichen der Mantelgeschwindigkeit des Zylinders entspricht. Das Aufbringen geschieht durch Andrücken, so dass das erste Lebensmittel an das zweite Lebensmittel zur Bildung eines Verbundes aus der Druckform heraus angedrückt wird, wobei die freie Oberfläche des zweiten Lebensmittels die Kontaktoberfläche bildet.

In bestimmten Fällen lässt sich das Herauslösen des ersten Lebensmittels aus der Druckform fördern, wenn seine Temperatur abgesenkt oder erhöht wird. Wenn die Druckform vor der Aufnahme des ersten Lebensmittels erwärmt und nach der Aufnahme abgekühlt wird oder wenn das erste Lebensmittel gekühlt wird, solange es von der Druckform aufgenommen ist, lässt es sich leichter aus der Druckform auf das Substrat des zweiten Lebensmittels übertragen. In anderen Fällen muss auf die umgekehrte Weise vorgegangen werden. Das Lebensmittel wird in der Druckform erwärmt, um seine Übertragung auf das zweite Lebensmittel zu erleichtern.

Mit besonderem Vorteil wird die Erfindung eingesetzt, wenn wenigstens eines der Lebensmittel, die eingesetzt werden, aus einer kakaohaltigen Mischung, insbesondere einer Schokolade oder einer Fettglasur, besteht. Die Erfindung lässt sich in Verbindung mit sämtlichen schokoladenartigen oder kakaohaltigen Zusammensetzungen verwenden, ebenso in Verbindung mit Zusammensetzungen, die einen Zucker, eine Zuckerverbindung, eine Nussmasse, eine Mandelmasse, eine Pistazienmasse oder dergleichen enthalten, sowie in Verbindung von beliebigen Gemischen dieser Substanzen. Insbesondere lassen sich auch fetthaltige Lebensmittel, wie Butter oder Kokosfett, oder Lebensmittel, die zu einem großen Anteil Butter oder Kokosfett oder ein anderes Fett enthalten, miteinander in Verbindung bringen. Insbesondere lassen sich auch Eismassen in Verbindung bringen, die sich durch ihre Farben voneinander unterscheiden.

Alternativ wird die Erfindung eingesetzt, um Lebensmittel in Verbindung zu bringen, die durch das Pürieren von Gemüsen entstanden sind. Beispielsweise lassen sich Erbsen, Karotten oder Kartoffeln pürieren. Bei jeweils an das Lebensmittel angepassten Temperaturen lässt sich ein erstes, beispielsweise pürierte Erbsen enthaltendes Lebensmittel auf ein zweites, beispielsweise pürierte Kartoffeln enthaltendes Lebensmittel auftragen. Auch hierbei kann der Prozess des Übertragens und Herauslösens des ersten Lebensmittels aus der Druckform durch Abkühlen oder Erwärmen unterstützt werden.

Vorzugsweise hat hierbei das zweite Lebensmittel eine hellere Farbe als das erste Lebensmittel. Dies bedeutet, dass im Fall kakaohaltiger Lebensmittel das zweite Lebensmittel einen geringeren Kakaogehalt aufweist als das erste. Oder das zweite Lebensmittel weist lediglich Kakaobutter und weitere Zusatzstoffe, jedoch keine Kakaoanteile, auf. Im Falle von Erbsen und Kartoffeln ergibt sich ein Farbunterschied durch den Kontrast zwischen dem Grün der Erbsen und der hellgelben Farbe der Kartoffeln.

Die Erfindung bezieht sich auch auf ein Lebensmittelprodukt, das nach einem der vorstehend aufgeführten Verfahren hergestellt ist.

Ebenso betrifft die Erfindung auch eine Formvorrichtung zum Einsatz in einem der oben beschriebenen Verfahren. Die Formvorrichtung umfasst eine Druckform, insbesondere aus Silikon oder Gummi, einen Träger, insbesondere eine Rahmenplatte, und ein Mittel zum Zusammendrücken der Druckform mit der Rahmenplatte.

Vorzugsweise sind auch Mittel zum Erwärmen und Abkühlen der Druckform und/oder der Rahmenplatte vorgesehen.

Ebenso wird erfindungsgemäß eine Formvorrichtung geschaffen, die einen sich drehenden, wenigstens eine Druckform tragenden Zylinder zum Übertragen eines in die wenigstens eine Druckform füllbaren ersten Lebensmittels auf ein auf einem flachen Träger aufgebrachtes zweites Lebensmittel aufweist. Eine derartige Formvorrichtung arbeitet nach dem Prinzip eines Tiefdruckverfahrens, wie es beispielsweise aus DD 263 501 A1 bekannt ist.

In vorteilhafter Weise ist vorgesehen, dass der Zylinder eine Vorrichtung zum Erwärmen oder Abkühlen der Druckform und/oder des von dieser aufgenommenen ersten Lebensmittels aufweist.

Von Vorteil ist es darüber hinaus auch, wenn sich ein Überschuss des ersten Lebensmittels mittels einer Abstreifvorrichtung, insbesondere mittels einer Rakel, von der Oberfläche des Zylinders entfernen lässt.

Insbesondere beim Einsatz in Verbindung mit einer Schokolade geht die Erfindung aus von einem Vorgang des Temperierens und Vorkristallisieren. Als Temperieren oder Vorkristallisieren bezeichnet man die thermische und mechanische Behandlung von geschmolzener Schokolade vor dem Gießen, Formen oder Überziehen mit dem Ziel, dass das fertige Produkt eine schöne, glänzende Oberfläche und einen knackigen Bruch erhält und sich leicht aus der Form lösen lässt. Schokolade, die untemperiert erstarrt, wird schnell stumpf, bricht torfig und neigt dazu, Fettreif zu bilden. Die Notwendigkeit des Temperierens ergibt sich aus dem besonderen Kristallisationsverhalten der in der Schokolade enthaltenen Kakaobutter, die ohne diese Behandlung beim Erstarren eine instabile Kristallform ausbilden würde; die nachträgliche Umwandlung in eine stabilere Form führt dann zu den beschriebenen unerwünschten Effekten. Der Temperiervorgang zielt daher auf verschiedenen Wegen darauf ab, die Kakaobutter zu veranlassen, möglichst weitgehend in einer stabilen Form zu kristallisieren. Eine kakaohaltige Fettglasur muss in der Regel nicht temperiert werden, was einer ihrer Vorteile gegenüber echter Schokolade ist.

Alle Verfahren des Temperierens haben zum Ziel, in der geschmolzenen Schokolade einen hohen Anteil von Kristallisationskeimen der Form V und einen geringeren Anteil von Kristallen der instabileren Formen zu erzeugen. Da der Schmelzpunkt der Form V höher ist als der anderen Formen, genügt es grundsätzlich, flüssige Schokolade auf eine Temperatur von beispielsweise 34 °C zu kühlen und so lange umzurühren, bis sich genügend Kristallisationskeime gebildet haben, um die ganze Masse im Falle einer raschen Abkühlung in der gewünschten Modifikation erstarren zu lassen. Dies dauert jedoch viel zu lange - eher Tage als Stunden - so dass man zu Mitteln greift, um die Kristallisation zu beschleunigen.

Hierzu bieten sich in erster Linie zwei Möglichkeiten: Zum einen ist es möglich, die Kristallisation einzuleiten, indem man eine geringe Menge bereits feste, in der gewünschten Form kristallisierte Schokolade zugibt. Hierzu wird die vollständig geschmolzene, ca. 45 bis 50 °C warme Schokolade mit zerkleinerter Schokolade geimpft, verrührt und dadurch auf ca. 27 °C abgekühlt. Anschließend wird die abgekühlte Schokolade auf die vorgesehene Verarbeitungstemperatur von ca. 29 bis 32 °C erwärmt, um ein Abschmelzen der unerwünschten instabilen Kristalle zu erreichen. Diese Vorgehensweise eignet sich vor allem für die Arbeit mit kleinen Chargen und wird oftmals in Haushaltsrezepten beschrieben, wo ein Teil der Kuvertüre vom Schmelzen zurückbehalten und geraspelt oder gerieben wird, aber auch in der Konditorei ist die Impfmethode bei der Arbeit mit Temperier- und Gießmaschinen gängig.

Die zweite Möglichkeit macht sich die Erkenntnis zunutze, dass die Kristallisation nicht nur durch Abkühlen, sondern auch durch mechanische Einwirkung, insbesondere durch das Ausüben von Scherkräften auf die Schokoladenmasse beschleunigt werden kann. Das liegt daran, dass bei gleichem Kristallisationsgrad viele kleine, gut verteilte Kristalle eine bessere Wirkung entfalten als wenige große Kristallisationskeime. Die Scherkräfte brechen die Kristalle auf und verteilen sie gleichmäßig in der Masse; der Effekt ist dermaßen ausgeprägt, dass man bei sehr starker Bearbeitung Kakaobutter anstelle von Stunden oder Tagen in 30 Sekunden vorkristallisieren kann. In der Praxis stellt die Erhitzung durch das Umrühren ein Problem dar, weil dadurch die entstandenen Kristalle wieder zu schmelzen drohen. Man arbeitet daher mit mäßigen Scherkräften und kühlt die Schokoladenmasse auch weiter herunter. Typisch für diese Verfahren ist, dass die an den kalten Oberflächen von Behältern und Werkzeugen entstehenden Kristalle immer wieder mit den wärmeren Masseteilen vermischt werden. Nach diesem Prinzip funktioniert das handwerkliche "Tablieren" der Schokolade, es liegt aber auch den meisten industriellen Temperiermaschinen zugrunde.

Der übliche Temperaturverlauf beim Temperieren variiert je nach der Zusammensetzung der Schokolade und dem angewandten Verarbeitungsverfahren: zunächst wird die Schokolade auf ungefähr 50 °C erhitzt, um sie vollständig zu schmelzen, womit gemeint ist, dass sie möglichst kein kristallines Fett mehr enthalten soll. In der Praxis sind die Temperaturen typischerweise etwas niedriger, teils um Energie zu sparen, teils, weil insbesondere Milchschokolade bei maximal 45 °C aufbewahrt werden sollte, um die Aggregation von Milchproteinen zu vermeiden.

Nach dem Aufschmelzen wird die Schokoladenmasse bis kurz unter den Schmelzpunkt der Kristallform V abgekühlt, und es folgt die Phase, in der die Kristallisation gefördert wird. Während dies geschieht, sinkt die Temperatur weiter ab. Dies führt zum einen dazu, dass sich auch Kristallisationskeime niederigerschmelzender, instabiler Formen bilden, zum anderen steigt die Viskosität der Masse, das heißt, sie wird dickflüssig. Zur weiteren Verarbeitung, sei es zum Formgießen, sei es als Überzugsmasse, ist jedoch normalerweise eine dünnflüssige Masse besser geeignet. Aus diesem Grund wird die Schokolade wieder auf eine Verarbeitungstemperatur von ca. 30 °C oder etwas mehr erwärmt. Entscheidend ist, dass diese Temperatur oberhalb des Schmelzpunktes der Form IV und anderer, noch instabilerer Formen, jedoch unterhalb des Schmelzpunktes der stabilen Form V liegt. Dadurch schmelzen die unerwünschten instabilen Kristalle ab, während gleichzeitig die Masse dünnflüssiger wird.

Folgende Temperaturbereiche lassen sich im Wesentlichen unterscheiden, wobei die Angaben je nach verwendeter Schokolade oder Kuvertüre variieren:
- Schmelzen - Abkühlen - Erwärmen
- Bitterkuvertüre: 45 °C - 27 °C - 31 - 32 °C
- Milchkuvertüre: 45 °C - 27 °C - 30 - 31 °C
- weiße Kuvertüre: 40 °C - 27 °C - 29 - 30 °C

Nachstehend wird die Erfindung in Ausführungsbeispielen anhand der Zeichnungen näher erläutert. Es zeigen:
- Fig. 1: eine Silikonmatte, in die nach einem Laserverfahren eine Tiefdruckform eingebracht wurde,
- Fig. 2: eine Schnittansicht entlang einer Schnittlinie A - A aus Fig. 1,
- Fig. 3: eine auf die Oberseite der Silikonmatte auflegbare Rahmenplatte,
- Fig. 4: eine Schnittansicht durch die auf einer Bodenplatte aufgelegte Silikonmatte in Verbindung mit der Rahmenplatte gemäß Fig. 3, wobei in der in der Silikonmatte gebildeten Druckform ein erstes Lebensmittel und in dem von der Rahmenplatte gebildeten Hohlraum ein zweites Lebensmittel eingebracht ist, in einer Schnittansicht gemäß einer Schnittlinie B - B aus Fig. 3,
- Fig. 5: eine Schnittansicht durch eine Rahmenplatte, deren Hohlraum mit einem zweiten Lebensmittel gefüllt ist und auf die beidseitig Silikonmatten aufgelegt sind, die ausgebildet sind wie die in Fig. 1 dargestellte Silikonmatte und die jeweils mit einer Druckform versehen sind, wobei die Silikonmatten mittels Bodenplatten gegen die Rahmenplatte andrückbar sind,
- Fig. 6: eine weitere, mit einer Druckform versehene Silikonmatte,
- Fig. 7: die in einen Hohlzylinder eingebrachte Silikonmatte gemäß Fig. 6,
- Fig. 8: den Hohlzylinder zusammen mit der Silikonmatte gemäß Fig. 7 in einer Schnittansicht gemäß einer Schnittlinie C - C aus Fig. 7 und
- Fig. 9: einen sich drehenden, mit Druckformen ausgestatteten Zylinder zur Übertragung einer viskosen Lebensmittelmasse auf ein flächiges Lebensmittel.

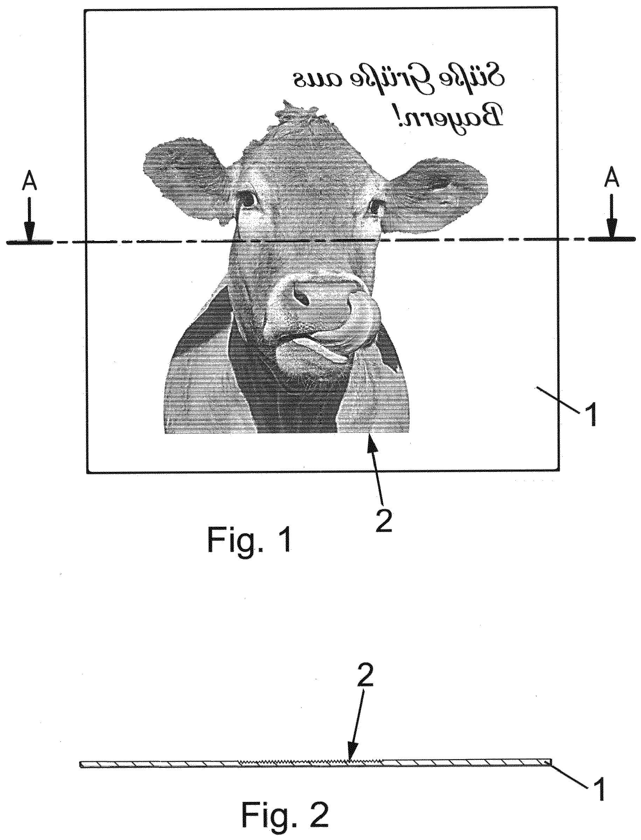

Zu Beginn des erfindungsgemäßen Druckverfahrens liegt eine Silikonmatte 1 (Fig. 1) vor. Diese wird in einem zweiten Schritt anhand einer Druckvorlage mit einem Laser bearbeitet (Fig. 2), so dass in der Silikonmatte 1 eine Tiefdruckform 2 entsprechend der Druckvorlage entsteht.

Sodann wird ein erstes Lebensmittel, beispielsweise temperierte Bitterschokolade, gefärbte Schokolade oder Milchschokolade auf die Druckform 2 gegeben, um diese aufzufüllen; mit Hilfe einer Rakel wird überschüssige Schokolade entfernt. Dadurch verteilt sich die Schokolade in den gelaserten Vertiefungen.

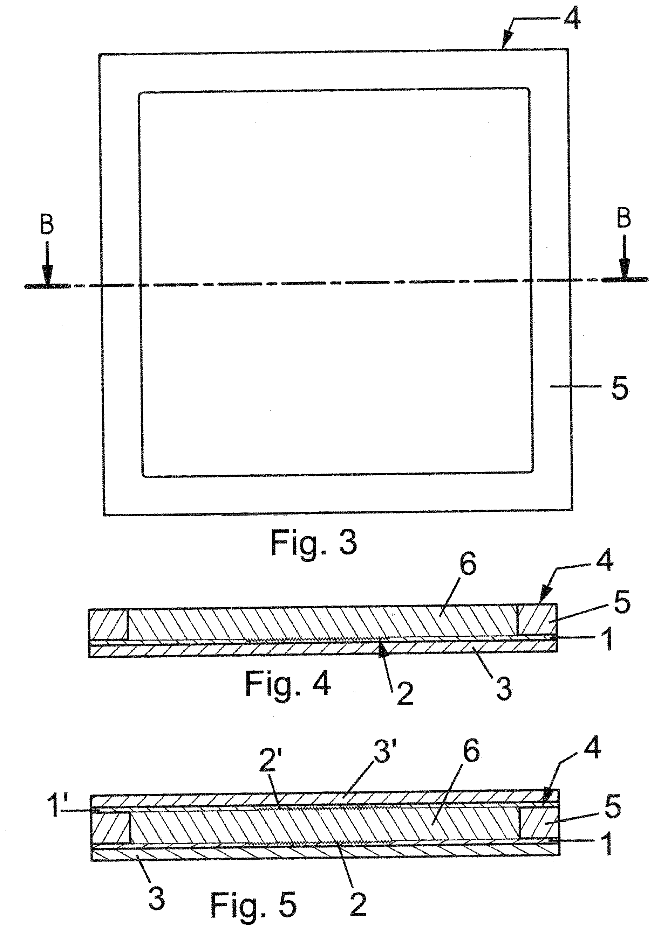

Nun wird die Silikonmatte 1 auf einer Bodenplatte 3 (in der Schnittansicht von Fig. 4 dargestellt) platziert, wobei die Druckform 2 und die in diese gefüllte Schokolade einer Rahmenplatte 4 (Fig. 3, 4) mit einem Rahmen 5 zugewandt werden, der oberhalb der Silikonmatte 1 zusammen mit der Bodenplatte 3 vorübergehend durch (hier nicht dargestellte) Klammern befestigt wird.

Anschließend wird ein zweites Lebensmittel, beispielsweise temperierte weiße Schokolade, in einen von dem Rahmen 5 gebildeten Hohlraum 6 gegossen, verteilt und zum Entweichen eventueller Luftblasen etwas gerüttelt.

Nach dem vollständigen Aushärten, das insbesondere durch zusätzliches Kühlen gefördert wird, wird die Bodenplatte 3 gelöst, das Schokoladenprodukt, bestehend aus dem Schokoladenstück, das den Hohlraum 6 ausfüllt, (zweites Lebensmittel) und dem Schokoladenprodukt, das die Druckform 2 ausfüllt, (erstes Lebensmittel) vorsichtig aus dem Rahmen 5 gedrückt und zuletzt die Silikonmatte 1 vorsichtig abgezogen. Man erhält das fertige, zusammenhängende Schokoladenobjekt, wobei auf der Oberfläche des zweiten Lebensmittels das erste Lebensmittel entsprechend der Druckform 2 aufgetragen ist und eine bildliche Darstellung bildet, wie sie der Druckvorlage entspricht. Es versteht sich, dass auch zunächst die Silikonmatte 1 abgezogen werden kann und sodann erst das Schokoladenobjekt aus dem Rahmen 5 gedrückt werden kann.

Wenn man ein Schokoladenprodukt mit einer Füllung herstellen möchte, wird nach dem Einfüllen der temperierten weißen Schokolade in den Hohlraum 6 diese größtenteils durch Umdrehen der Form wieder ausgegossen. Dadurch entsteht eine Hohlschale, in welche nach dem Aushärten die zuvor zubereitete Füllung bis knapp unterhalb des Randes des Rahmens 5 gegeben werden kann. Dabei muss eine Temperatur der Füllung beachtet werden, beispielsweise 28°C, damit die Hohlschale nicht zu sehr schmilzt.

In einem anderen Ausführungsbeispiel wird beidseitig der Rahmenplatte 4 eine mit jeweils einer Druckform 2, 2' (Fig. 5) versehene Silikonmatte 1, 1' aufgebracht. Hierbei werden entsprechend zwei Bodenplatten 3, 3' eingesetzt. Es wird sowohl auf der Vorder- als auch auf der Rückseite des zweiten Lebensmittels, beispielsweise einer weißen Schokolade, ein Abdruck aus der Druckform 2, 2' aufgetragen.

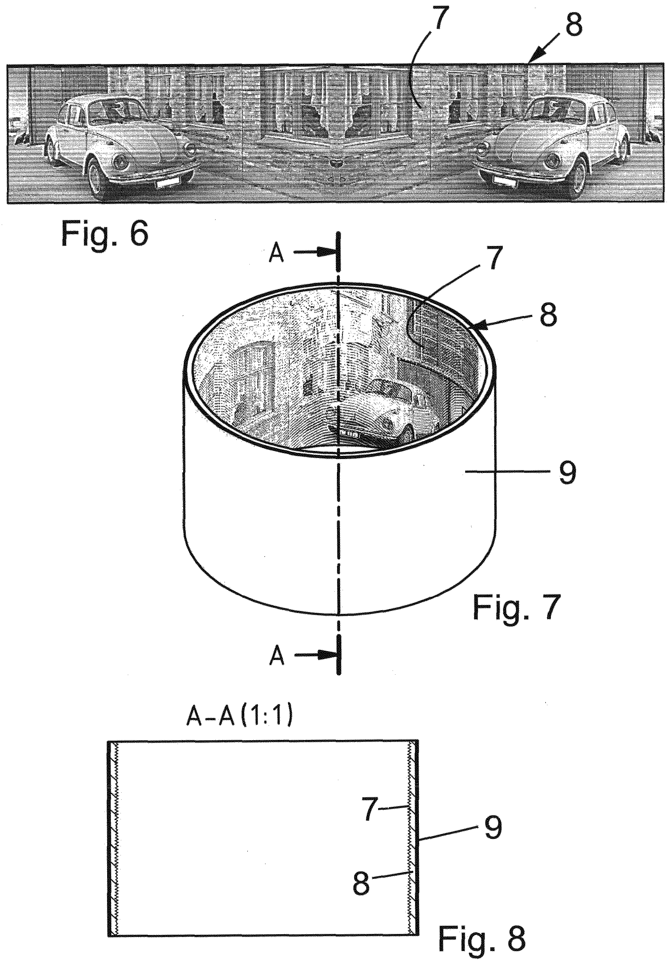

Alternativ lässt sich eine Druckform 7 (Fig. 6) auf eine Silikonmatte 8 aufbringen, in deren Vertiefungen Schokolade gegeben und abgerakelt wird und die anschließend zu einem Hohlzylinder (Fig. 7) verbogen wird und innenseitig in einen entsprechenden Hohlzylinder 9 hineingeschoben wird, der beispielsweise aus Kunststoff oder Metall besteht. Anstelle der Silikonmatte 8 lassen sich auch andere Träger zur Aufnahme einer Druckform 7 einsetzen, die sich elastisch verbiegen lassen, beispielsweise aus einem Gummimaterial.

Nun wird die Silikonmatte 8, zu einem Hohlzylinder verformt, auf die innere Mantelfläche eines Hohlzylinders 9 gelegt, der vorher mit Speiseöl ausgepinselt, damit sich diese nach Beendigung des Druckvorgangs leicht aus dem Hohlzylinder 9 herauslösen lässt.

Auf die Druckform 7 wird, beispielsweise mittels eines Pinsels oder mittels eines Spachtels, eine Schicht temperierter weißer Schokolade aufgetragen (nicht dargestellt), welche in diesem Fall das zweite Lebensmittel bildet. Hierbei muss beachtet werden, dass die aufgetragene Schicht nicht zu dünnwandig ist, damit sie beim späteren Ausformen nicht bricht. Alternativ kann der gesamte Hohlzylinder 9 mit Schokolade ausgefüllt werden.

Nach dem vollständigen Aushärten, das insbesondere durch Kühlung gefördert wird, wird die Silikonmatte 8 zusammen mit der auf ihrer Innenseite aufgetragenen Schokoladenschicht aus dem Hohlzylinder 9 herausgezogen.

Sodann wird die Silikonmatte 8 von der Schokoladeschicht abgezogen, auf der die in die Druckform 7 eingebrachte dunkle Schokolade verblieben ist.

Es versteht sich, dass weitere Schichten von Schokolade aufgetragen werden können, insbesondere mit Hilfe von entsprechend geformten Druckformen und Rahmenplatten.

Die Druckformen 2, 2', 7 enthalten entweder nur Bildelemente, wie Fig. 6 dargestellt, oder zusätzlich auch Textelemente, wie in Fig. 1 dargestellt, oder ausschließlich Textelemente.

Als Lebensmittel zur Bildung des Materials, das die Druckform 2, 2', 7 ausfüllt, eignet sich eine viskose, zähflüssige oder pastöse Masse, die erhärtet wie beispielsweise Schokolade, eine kakaohaltige Fettglasur, ein Nougaterzeugnis oder dergleichen; ebenso eignet sich jegliches Lebensmittel, das in eine pastöse Form bringbar ist, wie es bei einem Gemüse der Fall ist. Das Erhärten des Gemüses erfolgt dann durch einen Back-, Brat- oder Garvorgang, wobei die beiden gemüsehaltigen Lebensmitteln, die die Druckform 2, 2', 7 ausfüllen bzw. die die Schicht bilden, die mit dem in der Druckform 2, 2', 7 befindlichen Lebensmittel verbunden werden. Anstelle einer Gemüsemasse lässt sich auch eine ei-, eiweiß- oder eigelbhaltige Masse einsetzen, wie sie beispielsweise zur Herstellung von Speiseeis verwendet wird. Dies bedeutet, dass bei Einhaltung entsprechender Temperaturbereiche die Druckform 2, 2', 7 auch mit einer ersten Speiseeismasse, die eine erste Farbe aufweist, und der Hohlkörper 6 mit einer zweiten Speiseeismasse ausgefüllt sein kann, die eine zweite Farbe aufweist.

Eine Erhärtung der Schichten und dadurch mögliche Ausformung kann zudem durch Gefrieren bewirkt oder unterstützt werden. Auch ist ein Backen beider Schichten auch dann realisierbar, wenn eines der Lebensmittel Hippenmasse ist. Ebenso ist Konfektmaterial, wie etwa Fondant, Fudge oder Weichkaramel geeignet, um damit die Druckform 2, 2', 7 auszufüllen oder, um damit den Hohlraum 6 auszufüllen oder eine Schicht zu bilden, die innenseitig auf die Silikonmatte 8 und das in die Druckform 7 eingebrachte Material aufgestrichen wird.

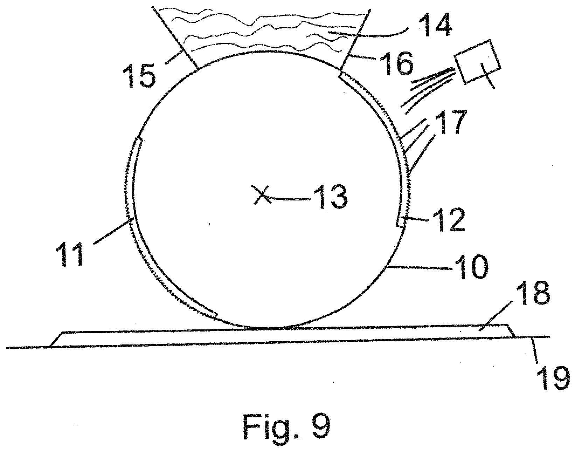

In einem weiteren Ausführungsbeispiel ist ein sich drehender Zylinder 10 (Fig. 9) mit Druckformen 11, 12 ausgestattet, die wie Tiefdruckformen gebildet sind und auswechselbar auf dem Zylinder 10 aufgebracht sind.

Der Zylinder 10 dreht sich um eine Achse 13. In die Druckformen 11, 12 wird ein flüssiges, viskoses Lebensmittel aus einem als Kammerrakel ausgebildeten Behälter 14 eingebracht. Seitenwände 15, 16 bilden Rakeln aus und begrenzen dadurch die Menge des aus dem Behälter 14 herausfließenden Lebensmittels auf die Menge, die erforderlich ist, um in die Druckformen 11, 12 entsprechend den durch die Druckformen 11, 12 darzustellenden Bildern eingebrachten Vertiefungen 17 auszufüllen. Sodann wird das Lebensmittelmaterial in den Vertiefungen 17 so temperiert, dass es auf ein flächiges Stück 18 eines wenigstens im Wesentlichen festen Lebensmittels übertragen wird, das sich auf einem Band 19 unterhalb des Zylinders 10 hinwegbewegt, wobei der Zylinder 10 und/oder dessen Druckformen 11, 12 auf das Stück 18 einen gewissen Anpressdruck ausüben. Das Band 19 bewegt sich mit einer Geschwindigkeit, die wenigstens im Wesentlichen mit der Mantelgeschwindigkeit des Zylinders 10 übereinstimmt.

Seitlich des Zylinders 10 ist eine Wärmestrahlungsquelle 20 vorhanden, die entsprechend der gewünschten Viskosität des in den Druckformen 11, 12 eingebrachten Lebensmittels diese bestrahlt, um die Temperatur zu erhöhen. Ferner lässt sich der Einsatz einer (hier nicht dargestellten) Kühlvorrichtung vorsehen, um, insbesondere im Bereich der Übertragung des ersten Lebensmittels aus den Druckformen 11, 12 auf das Stück 18 dessen Temperatur wieder absenkt. Die Wärmestrahlungsquelle 20 ist vorzugsweise mit einem Sensor, insbesondere im Infrarot-Bereich, ausgestattet, die die Oberflächentemperatur des Zylinders 10 und der auf ihm aufgebrachten Druckformen 11, 12 erfasst. Anstelle der Wärmestrahlungsquelle 20 wird alternativ eine Kühlvorrichtung vorgesehen, wenn dies entsprechend der Konsistenz des in den Druckformen eingebrachten Lebensmittels erforderlich ist.

Auch im Inneren des Zylinders 10 sind vorzugsweise Erwärmungs-, Kühl- und/oder Temperiervorrichtungen vorgesehen. Hierzu ist der Zylinder 10 vorzugsweise mit einer Drehdurchführung ausgestattet, durch das ein Temperiermittel, kaltes oder warmes Wasser, zugeführt und ausgeleitet wird.

## Patentansprüche

1. Verfahren zur Übertragung eines als gießbare Masse vorliegenden ersten Lebensmittels auf eine Kontaktoberfläche,
**dadurch gekennzeichnet,**
**dass** das erste Lebensmittel in eine Druckform (2, 2', 7; 11, 12) eingebracht wird, die eine bildliche Darstellung wiedergibt, und dass das erste Lebensmittel dann aus der Druckform (2, 2', 7; 11, 12) auf ein zweites, die Kontaktoberfläche bildendes Lebensmittel übertragen wird.

2. Verfahren nach Anspruch 1,
**dadurch gekennzeichnet,**
**dass** das erste Lebensmittel temperiert und in die Druckform (2, 2', 7; 11, 12) eingebracht wird, dass überschüssige Mengen des ersten Lebensmittels mittels einer Rakel entfernt werden, dass das erste, in der Druckform (2, 2', 7; 11, 12) befindliche Lebensmittel mit dem zweiten, ebenfalls temperierten Lebensmittel verbunden und gemeinsam mit dem zweiten Lebensmittel abgekühlt wird und dass die Druckform (2, 2', 7; 11, 12) von dem Verbund der beiden gekühlten Lebensmittel abgezogen wird.

3. Verfahren nach Anspruch 2,
**dadurch gekennzeichnet,**
**dass** die Druckform (2, 2', 7; 11, 12) von einer Silikonmatte (1, 1') gebildet wird, dass das zweite, in einer Hohlform befindliche Lebensmittel an der Kontaktoberfläche mit der Oberfläche des ersten Lebensmittels mit diesem verbunden wird, und dass die Silikonmatte (1, 1'), insbesondere in Verbindung mit einer Trägerplatte, nach dem Befüllen und Abrakeln des überschüssigen ersten Lebensmittels gegenüber der Hohlform fixiert wird.

4. Verfahren nach Anspruch 3,
**dadurch gekennzeichnet,**
**dass** die Hohlform von einer Rahmenplatte (4) gebildet wird, in die das zweite Lebensmittel nach dem Fixieren der Silikonmatte (1, 1') eingebracht wird.

5. Verfahren nach Anspruch 2,
**dadurch gekennzeichnet,**
**dass** das erste Lebensmittel in die auf der Mantelfläche eines sich drehenden Zylinders (10) angeordnete Druckform (11, 12) eingebracht wird und dass das erste Lebensmittel nach dem Entfernen überschüssiger Mengen des ersten Lebensmittels auf das zweite Lebensmittel aufgebracht wird, das auf einem ebenen Band mit einer Geschwindigkeit transportiert wird, die im Wesentlichen der Mantelgeschwindigkeit des Zylinders entspricht, dass das erste Lebensmittel an das zweite Lebensmittel zur Bildung eines Verbundes aus der Druckform (11, 12) heraus angedrückt wird, wobei die freie Oberfläche des zweiten Lebensmittels die Kontaktoberfläche bildet.

6. Verfahren nach Anspruch 5,
**dadurch gekennzeichnet,**
**dass** die Druckform (11, 12) vor der Aufnahme des ersten Lebensmittels erwärmt und nach der Aufnahme abgekühlt oder dass das erste Lebensmittel gekühlt wird, solange es von der Druckform (11, 12) aufgenommen ist.

7. Verfahren nach einem der Ansprüche 1 bis 6,
**dadurch gekennzeichnet,**
**dass** wenigstens eines der Lebensmittel, die eingesetzt werden, aus einer kakaohaltigen Mischung, insbesondere einer Schokolade oder einer Fettglasur, einer fetthaltigen Masse oder einer Hippenmasse oder aus einer ei-, eiweiß-, eigelb- oder gemüsehaltigen Masse besteht.

8. Verfahren nach Anspruch 7,
**dadurch gekennzeichnet,**
**dass** das zweite Lebensmittel eine hellere Farbe aufweist als das erste Lebensmittel, insbesondere, dass das zweite Lebensmittel einen niedrigeren Kakaogehalt aufweist als das erste Lebensmittel.

9. Lebensmittelprodukt,
**dadurch gekennzeichnet,**
**dass** es nach einem Verfahren gemäß einem der Ansprüche 1 bis 8 hergestellt ist.

10. Formvorrichtung zum Einsatz in einem Verfahren nach einem der Ansprüche 1 bis 4, umfassend eine Druckform (2, 2', 7), insbesondere aus Silikon oder Gummi, einen Träger, insbesondere eine Rahmenplatte, und ein Mittel zum Zusammendrücken der Druckform (2, 2', 7) mit der Rahmenplatte.

11. Formvorrichtung nach Anspruch 10,
**dadurch gekennzeichnet,**
**dass** Mittel zum Erwärmen und Abkühlen der Druckform (2, 2', 7; 11, 12) und/oder der Rahmenplatte vorgesehen sind.

12. Formvorrichtung zum Einsatz in einem Verfahren nach Anspruch 5,
**dadurch gekennzeichnet,**
**dass** die Formvorrichtung einen sich drehenden, wenigstens eine Druckform (11, 12) tragenden Zylinder (10) zum Übertragen eines in die wenigstens eine Druckform (11, 12) füllbaren ersten Lebensmittels auf ein auf einem flachen Träger (19) aufgebrachtes zweites Lebensmittel aufweist.

13. Formvorrichtung nach Anspruch 12,
**dadurch gekennzeichnet,**
**dass** der Zylinder eine Vorrichtung zum Erwärmen oder Abkühlen der Druckform (11, 12) und/oder des von dieser aufgenommenen ersten Lebensmittels aufweist.

14. Formvorrichtung nach Anspruch 12 oder 13,
**dadurch gekennzeichnet,**
**dass** ein Überschuss des ersten Lebensmittels mittels einer Abstreifvorrichtung, insbesondere mittels einer Rakel (14, 15), von der Oberfläche des Zylinders (10) entfernbar ist.
